# EUROPÄISCHE PATENTSCHRIFT

(11) **EP 0 496 189 B1**
(45) Veröffentlichungstag und Bekanntmachung des Hinweises auf die Patenterteilung: **21.06.1995**
(21) Anmeldenummer: 92100030.3
(22) Anmeldetag: 02.01.1992
(51) Int. Cl.: H04M 1/04, H04R 1/08

(54) **Halterung für einen elektroakustischen Wandler**
Support for an electro-acoustic converter
Fixation pour un convertisseur électroacoustique

(30) Priorität: 22.01.1991 DE 9100707 U
(43) Veröffentlichungstag der Anmeldung: 29.07.1992
(73) Patentinhaber: SIEMENS AKTIENGESELLSCHAFT, 80333 München (DE)
(72) Erfinder: Benning, Johannes, Dipl.-Ing., W-4280 Borken (DE); Reuschel, Jürgen, W-4290 Bocholt (DE)

(56) Entgegenhaltungen:
- EP-A- 0 398 212
- AT-B- 323 245
- DE-A- 2 254 410
- DE-A- 3 325 326
- DE-C- 2 309 978
- DE-C- 3 107 308

## Beschreibung

Die vorliegende Erfindung beinhaltet eine Halterung für einen innerhalb eines Handapparates einer Fernsprechstation angeordneten elektroakustischen Wandler, die auf ihrem Umfang mehrere federnde Rastarme aufweist, die im Hör- oder Einsprachebereich des Handapparates angeordnete und ihnen anzahlmäßig entsprechende Gegenrasten untergreifen.

Elektroakustische Wandler werden üblicherweise in aus Kunststoff bestehenden Halterungen innerhalb des Handapparates einer Fernsprechstation gelagert, wobei die Halterungen entweder aus der den Schalldurchlaßöffnungen des Hör- oder Einsprachebereiches des Handapparates abgewandten Seite (DE-PS 31 07 308) oder unmittelbar im Bereich der Schalldurchlaßöffnungen (DE-PS 23 09 978) durch eine Schnapp- oder Rastverbindung mit dem Handapparat verbunden sind. Zu diesem Zweck untergreifen an der Halterung vorgesehene federnde Rastarme ihnen anzahlmäßig entsprechende Gegenrasten, so daß der Wandler im montierten Zustand in axialer Richtung gesichert ist. Die in neuerer Zeit zur Anwendung gelangenden Handapparate bestehen aus zwei Halbschalen, die üblicherweise mittels Schrauben miteinander verbunden sind. Dadurch lassen sich die Wandler bereits vor dem Zusammenbau des Handapparates in einer der beiden Halbschalen lagesicher einbringen.

Obgleich derartige Wandler in einer relativ starren Aufnahme gelagert sind, besteht bei plötzlich auf den Handapparat ausgeübten Stoß- und Schlagbelastungen die Möglichkeit, daß sich eine oder mehrere der durch die Rastarme und die Gegenrasten bewirkten Rastverbindungen lösen können, so daß die gewünschte akustisch dichte Anlage des Wandlers an die Schalldurchlaßöffnungen des Handapparates nicht mehr gewährleistet ist.

Der Erfindung liegt daher - ausgehend von der obengenannten Ausführungsform - die Aufgabe zugrunde, eine stoß- und schlagsichere Halterung für einen elektroakustischen Wandler innerhalb des Handapparates einer Fernsprechstation zu schaffen, bei der ein Lösen der genannten Rastverbindung mit Sicherheit ausgeschlossen ist.

Diese Aufgabe wird dadurch gelöst, daß die Halterung aus einem ringförmigen Grundkörper mit mehreren einstückig mit ihm verbundenen Rastarmen besteht, wobei im Bereich der Rastarme im ringförmigen Grundkörper Bohrungen vorgesehen sind, die zur Aufnahme von in ihnen parallel zu den Rastarmen verschiebbar angeordneten und in etwa die Länge der Rastarme aufweisenden Stiften dienen.

Bei dieser erfindungsgemäß gestalteten Halterung wird wie bei der bekannten Ausführungsform der Wandler zunächst in die Halterung eingelegt und anschließend soweit in den Hör- oder Einsprachebereich des Handapparates eingebracht, bis die Rastarme der Halterung die Gegenrasten im Handapparat untergreifen. Als zusätzliche Sicherung dieser Rastverbindung dienen die im Bereich der Rastarme in Bohrungen geführten Stifte, die vor Beginn des Rastvorgangs soweit aus dem ringförmigen Grundkörper herausgezogen werden, daß sie den Federweg der Rastarme beim Rastvorgang nicht einschränken. Erst nach Beendigung des Rastvorgangs werden die Stifte in Richtung auf den Hör- oder Einsprachebereich des Handapparates soweit verschoben, bis sie an der die Schalldurchlaßöffnungen begrenzenden Innenwand des Handapparates zur Anlage gelangen. Da die Stifte in paralleler Richtung zu den Rastarmen verschoben werden und sich im Endzustand in nur geringem Abstand zu den Rastarmen befinden, wird somit ein Lösen der Verbindung zwischen dem Rastarm und der Gegenraste mit Sicherheit auch bei größerer Stoßbelastung auf den Handapparat verhindert.

Dabei können die Bohrungen und die in ihnen verschiebbar gelagerten Stifte einen beliebigen, z. B. recht- oder dreieckigen Querschnitt aufweisen. Aus fertigungs- und montagetechnischen Gründen hat es sich jedoch als zweckmäßig erwiesen, die Bohrungen und die Stifte so zu gestalten, daß sie einen kreisförmigen Querschnitt aufweisen.

Ferner können zur Erhöhung der Elastizität vom ringförmigen Grundkörper sowie der Rastarme am ringförmigen Grundkörper im Bereich der Rastarme Einschnitte vorgesehen sein.

Eine nur kleinflächige Anlage an den Außenkonturen des elektroakustischen Wandlers läßt sich darüber hinaus noch dadurch erreichen, daß der Grundkörper an seiner den Rastarmen zugewandten Ebene mehrere kurze Nasen aufweist.

Durch die beiden letztgenannten Maßnahmen können somit geringfügige Fertigungstoleranzen bei der Herstellung des Wandlers sowie des Handapparates durch ein federndes Nachgeben des ringförmigen Grundkörpers ausgeglichen werden.

Die Neuerung soll im folgenden anhand eines Ausführungsbeispiels näher erläutert werden.

Es zeigt
Figur 1 die Halterung für einen elektroakustischen Wandler in einer Aufsicht,
Figur 2 die Halterung nach Figur 1 in einer geschnittenen Seitenansicht längs der Schnittlinie II-II,
Figur 3 die Befestigung eines elektroakustischen Wandlers in einem teilweise dargestellten Handapparat einer Fernsprechstation in einer teilweise geschnittenen Ansicht.

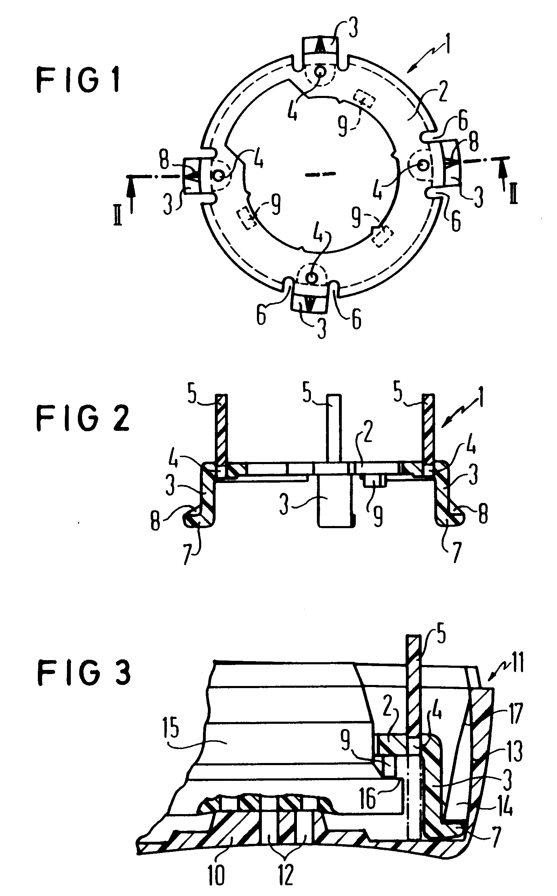

Die in den Figuren 1 und 2 dargestellte Halterung 1 besteht im wesentlichen aus einem ringförmigen Grundkörper 2 mit mehreren einstückig mit ihm verbundenen und auf seinem Umfang angeordneten federnden Rastarmen 3. Im Bereich der Rastarme 3 sind im ringförmigen Grundkörper 2 Bohrungen 4 kreisförmigen Durchmessers vorgesehen, die zur Aufnahme von in ihnen parallel zu den Rastarmen verschiebbar angeordneten Stiften 5 runden Querschnitts dienen. Im Verbindungsbereich der Rastarme 3 mit dem Grundkörper 2 sind Einschnitte 6 vorgesehen, um die Elastizität der Rastarme 3 zu erhöhen. Die Rastarme besitzen jeweils an ihrem freien Ende einen nach außen weisenden kurzen Ansatz 7, der über einen dünnen Steg 8 mit dem jeweiligen Rastarm 3 verbunden ist. Ferner weist der ringförmige Grundkörper 2 in seiner den Rastarmen zugewandten Ebene mehrere auf seinem Umfang und zu den Rastarmen versetzt angeordnete kurze Nasen 9 auf.

Die Befestigung eines elektroakustischen Wandlers innerhalb eines Handapparates einer Fernsprechstation mittels der Halterung 1 ist in Figur 3 dargestellt.

Im Hör- oder Einsprachebereich 10 des Handapparates 11 befinden sich neben den Schalldurchlaßöffnungen 12 an der Innenwandung 13 des Handapparates 11 mehrere keilförmig zulaufende Gegenrasten 14, die den Rastarmen 3 anzahlmäßig und lagemäßig entsprechen. Die Gegenrasten 14 sind so gestaltet, daß sie vom Hör- oder Einsprachebereich 10 beabstandet angeordnet sind.

Zur Befestigung des elektroakustischen Wandlers 15 innerhalb des Hör- oder Einsprachebereiches des Handapparates 11 wird der Wandler 15 in die Halterung 1 eingelegt. Die Stifte 5 sind dabei soweit aus dem ringförmigen Grundkörper herausgezogen, daß sie sich noch innerhalb der Bohrungen 4 befinden, um die Verformung der Rastarme 3 nicht einzuschränken. Beim Einlegevorgang kommen die Nasen 9 an der ringförmigen Außenkontur 16 des Wandlers 15 zur Anlage. Beim Eindrücken der Halterung 1 mit dem Wandler 15 gleiten die Rastarme an der keilförmig auslaufenden Wandung 17 entlang und werden zueinander verformt. In der Endlage untergreifen diese Rastarme 3 mit ihren kurzen Ansätzen 7 die Gegenrasten 14, wobei die Nasen 9 den Wandler 15 akustisch dicht an die Schalldurchlaßöffnungen 12 anpressen.

Um eine zusätzliche Sicherung des im Handapparat 11 auf diese Weise befestigten Wandlers 15 bei auf den Handapparat 11 plötzlich ausgeübten Stoß- und Schlagbelastungen zu erreichen, werden anschließend die Stifte 5 soweit in Richtung auf die Shalldurchlaßöffnungen 12 verschoben, bis sie an der Innenwandung 13 des Hör- oder Einsprachebereiches zur Anlage gelangen. Dadurch wird ein unerwünschtes Nachgeben der Rastarme 3 in Richtung auf die Schalldurchlaßöffnungen 12 verhindert und damit ein Lösen der Rastverbindung zwischen dem jeweiligen Rastarm 3 und der zugehörigen Gegenraste 14 mit Sicherheit ausgeschlossen.

## Patentansprüche

1. Halterung (1) für einen innerhalb eines Handapparates (11) einer Fernsprechstation angeordneten elektroakustischen Wandler (15), die auf ihrem Umfang mehrere federnde Rastarme (3) aufweist, die im Hör- oder Einsprachebereich (10) des Handapparates (11) angeordnete und ihnen anzahlmäßig entsprechende Gegenrasten (14) untergreifen, **dadurch gekennzeichnet**, daß die Halterung (1) aus einem ringförmigen Grundkörper (2) mit mehreren einstückig mit ihm verbundenen Rastarmen (3) besteht, wobei im Bereich der Rastarme (3) im ringförmigen Grundkörper (2) Bohrungen (4) vorgesehen sind, die zur Aufnahme von in ihnen parallel zu den Rastarmen (3) verschiebbar angeordneten und in etwa die Länge der Rastarme (3) aufweisenden Stiften (5) dienen.

2. Halterung nach Anspruch 1, **dadurch gekennzeichnet**, daß die Bohrungen (4) und die Stifte (5) einen kreisförmigen Querschnitt aufweisen.

3. Halterung nach Anspruch 1, **dadurch gekennzeichnet**, daß am ringförmigen Grundkörper (2) im Bereich der Rastarme (3) Einschnitte (6) vorgesehen sind.

4. Halterung nach Anspruch 1, **dadurch gekennzeichnet**, daß der Grundkörper (2) an seiner den Rastarmen (3) zugewandten Ebene mehrere kurze Nasen (9) aufweist.

## Claims

1. Holder (1) for an electroacoustic transducer (15) arranged inside a handset (11) of a telephone station, which holder exhibits on its circumference a number of elastic locking arms (3) which engage below counter-catches (14) arranged in the listening or speaking area (10) of the handset (11) and corresponding to the former in numbers, characterized in that the holder (1) comprises an annular base body (2) having a number of locking arms (3) which are joined to it integrally, holes (4) being provided in the annular base body (2) in the area of the locking arms (3), which holes are used for accommodating pins (5) arranged displaceably parallel to the locking arms (3) in them and exhibiting approximately the length of the locking arms (3).

2. Holder according to Claim 1, characterized in that the holes (4) and the pins (5) exhibit a circular cross section.

3. Holder according to Claim 1, characterized in that cut-ins (6) are provided in the area of the locking arms (3) on the annular base body (2).

4. Holder according to Claim 1, characterized in that the base body (2) exhibits a number of short noses (9) on its plane facing the locking arms (3).

## Revendications

1. Dispositif de fixation (1) pour un transducteur électroacoustique (4) disposé à l'intérieur d'un combiné (11) téléphonique, et qui comporte, sur sa périphérie, plusieurs bras élastiques d'encliquetage (3) qui s'engagent au-dessous d'organes d'encliquetage antagonistes (14) qui sont disposés dans la partie écouteur ou dans la partie émetteur (10) du combiné (11) et sont présents en un nombre correspondant à celui des bras d'encliquetage, caractérisé par le fait que le dispositif de fixation (1) est constitué par un corps de base de forme annulaire (2) comportant plusieurs bras d'encliquetage (3) qui sont réunis d'un seul tenant au corps de base et dans la zone desquels sont aménagés, dans le corps de base annulaire (2), des perçages (4), qui servent à loger des tiges (5) qui sont disposées de manière à être déplaçables dans ces perçages, parallèlement aux bras d'encliquetage (3) et possèdent approximativement la longueur des bras d'encliquetage (3).

2. Dispositif de fixation suivant la revendication 1, caractérisé par le fait que les perçages (4) et les tiges (5) possèdent une section transversale de forme circulaire.

3. Dispositif de fixation suivant la revendication 1, caractérisé par le fait que des encoches (6) sont prévues sur le corps de base annulaire (2), dans la zone du bras d'encliquetage (3).

4. Dispositif de fixation suivant la revendication 1, caractérisé par le fait que le corps de base (2) possède plusieurs ergots de courte longueur (9) dans son plan tourné vers les bras d'encliquetage (3).
